# EUROPÄISCHE PATENTANMELDUNG

(11) **EP 4 438 364 A1**
(43) Veröffentlichungstag der Anmeldung: **02.10.2024**
(21) Anmeldenummer: 24165256.9
(22) Anmeldetag: 21.03.2024
(51) Int. Cl.: B60K 1/04, B60L 50/60, B60N 2/015, B60N 2/24, B60N 2/68

(54) **FREIZEITFAHRZEUG, INSBESONDERE WOHNMOBIL, MIT EINEM GURTBOCK**

(30) Priorität: 23.03.2023 DE 102023107400
(71) Anmelder: Hymer GmbH & Co. KG, 88339 Bad Waldsee (DE)
(72) Erfinder: Fiedler, Andreas, 89231 Neu-Ulm (DE); Zitterell, Kai-Uwe, 89617 Untermarchtal (DE); Hörmann, Hannes, 88339 Bad Waldsee (DE)
(74) Vertreter: Müller Schupfner & Partner Patent- und Rechtsanwaltspartnerschaft mbB (Muc)

(57) **Zusammenfassung**

Freizeitfahrzeug (1), insbesondere ein Wohnmobil, mit einem Fahrzeugrahmen (2) und zumindest einem Gurtbock (3), der zumindest mittelbar an dem Fahrzeugrahmen (2) befestigt ist. Vorgeschlagen wird, dass ein Batterieraum (10) vorgegeben ist, der zumindest teilweise innerhalb des Fahrzeugrahmens (2) angeordnet ist, dass der Gurtbock (3) zumindest teilweise oberhalb des Batterieraums (10) angeordnet ist, und dass der Gurtbock (3) so mit dem Fahrzeugrahmen (2) verbunden ist, dass Verbindungselemente (11), die zum Verbinden des Gurtbocks (3) mit dem Fahrzeugrahmen (2) dienen, außerhalb des Batterieraums (10) angeordnet sind.

## Beschreibung

Die Erfindung betrifft ein Freizeitfahrzeug, insbesondere ein Wohnmobil, mit einem Gurtbock.

Es gibt mehrere Offenbarungen von Gurtbockanordnungen, insbesondere für Wohnmobile, in verschiedener Ausführung. Beispielsweise ist aus der DE 20 2020 106 815 U1 eine Gurtbockanordnung für ein Wohnmobil bekannt. Die bekannte Gurtbockanordnung weist einen Gurtbock und ein Rückhaltesystem auf. Das Rückhaltesystem umfasst ein Gurtsystem und einen am Gurtbock angeordneten Haltebeschlag einer Sitzsicherung für einen Kindersitz. Hierbei sind am Gurtbock mehrere einzelne Haltebeschläge getrennt voneinander und eigenständig nebeneinander angeordnet. Die Gurtbockanordnung weist eine Fußplatte und einen schrägen Stützfuß auf. Der Gurtbock ist auf einem Boden stehend angeordnet. Der Gurtbock kann am Boden und/oder am Fahrgestell über ein dortiges besonderes Stützprofil befestigt sein. Der Gurtbock wird an einem seitlichen Fahrzeugrand über einen dortigen Längsträger montiert.

Die aus der DE 20 2020 106 815 U1 bekannte Gurtbockanordnung hat den Nachteil, dass für die Befestigung des Gurtbocks der unter dem Boden liegende Raum für die Montage benötigt wird. An der Fußplatte und am Stützfuß sind Anschraubbilder vorgesehen, über die eine Schraubbefestigung mittels mehrere Schraubverbindungen am Boden erfolgt. Die Schraubverbindungen ragen in den unter dem Boden liegenden Raum. Außerdem müssen entsprechend den Anschraubbildern Durchgangsbohrungen in dem Boden gebohrt sein.

Aufgabe der Erfindung ist es, ein Freizeitfahrzeug, insbesondere ein Wohnmobil, mit zumindest einem Gurtbock anzugeben, das einen verbesserten Aufbau aufweist und eine verbesserte Funktionsweise ermöglicht.

Die Aufgabe wird durch ein Freizeitfahrzeug mit den Merkmalen des unabhängigen Patentanspruchs 1 gelöst. Vorteilhafte Weiterbildungen der Erfindung sind in den Unteransprüchen angegeben.

Die Aufgabe wird durch ein Freizeitfahrzeug, insbesondere ein Wohnmobil, mit einem Fahrzeugrahmen und zumindest einem Gurtbock, der zumindest mittelbar an dem Fahrzeugrahmen befestigt ist, gelöst, wobei ein Batterieraum vorgegeben ist, der zumindest teilweise innerhalb des Fahrzeugrahmens angeordnet ist, wobei der Gurtbock zumindest teilweise oberhalb des Batterieraums angeordnet ist, und wobei der Gurtbock so mit dem Fahrzeugrahmen verbunden ist, dass Verbindungselemente, die zum Verbinden des Gurtbocks mit dem Fahrzeugrahmen dienen, außerhalb des Batterieraums angeordnet sind. Der Begriff Wohnmobil ist im Rahmen dieser Erfindung breit zu verstehen. Beispielsweise kann ein Campervan von dem Begriff Wohnmobil umfasst sein.

Bei einer besonders bevorzugten Ausgestaltung kann auf diese Weise die Ausgestaltung eines elektrisch angetriebenen Freizeitfahrzeugs realisiert werden, bei dem zumindest eine Traktionsbatterie in dem Batterieraum angeordnet ist. Hierbei kann der Raum unter dem Boden, insbesondere der Batterieraum, optimal genutzt werden, um dieses Antriebskonzept zu nutzen und um gleichzeitig eine verbesserte Gestaltung des Innenraums zu ermöglichen, da Komponenten in dem Fahrzeugrahmen untergebracht werden können.

Vorteilhaft ist es, dass über dem Batterieraum ein Batterieraumbereich eines Bodens angeordnet ist, der den Batterieraum begrenzt und der zumindest teilweise zwischen dem Gurtbock und dem Batterieraum angeordnet ist, und die Verbindungselemente außerhalb des Batterieraumbereichs des Bodens angeordnet sind. Der Bereich über der Batterie muss dadurch bei der Montage weder gebohrt noch verändert werden. Ferner werden Beschädigungen dieses Bereichs verhindert.

Vorteilhaft ist es, dass der Gurtbock zumindest einen Stützfuß aufweist, der zumindest mittelbar auf dem Batterieraumbereich des Bodens abgestützt ist, dass der Stützfuß vollständig oberhalb des Batterieraumbereichs des Bodens angeordnet ist und dass der Stützfuß selbst zumindest nicht formschlüssig mit dem Boden verbunden ist. Dadurch kann der Stützfuß nur auf dem Boden abgestützt sein, ohne dass eine Bearbeitung des Bodens, beispielsweise durch Bohren, erfolgt. Es ist denkbar, dass auf dem Boden Bauteile angeordnet sind, die beispielsweise mit dem Boden durch Kleben verbunden sind. Es kann aber auch vorgesehen sein, dass zusätzlich zu dem Stützfuß ein Bohren vorgesehen ist. Beispielsweise kann eine einseitige Befestigung basierend auf einem Bohren, z.B. mittels Nietmuttern, vorgesehen sein.

Vorteilhaft ist es, dass zumindest eine Drehmomentstütze vorgesehen ist, die zumindest teilweise über dem Batterieraumbereich des Bodens angeordnet ist, und dass die Drehmomentstütze zumindest mittelbar auf dem Batterieraumbereich des Bodens abgestützt ist. Dadurch wird eine vorteilhafte Kraftübertragung ermöglicht, ohne dass Verbindungselemente in den Batterieraum ragen oder der Boden über dem Batterieraum verändert werden muss.

Vorteilhaft ist es, dass der Gurtbock so auf dem Batterieraumbereich des Bodens abgestützt ist, dass im Betrieb Druck- und/oder Biegekräfte zumindest am Batterieraumbereich des Bodens zumindest mittels des Bodens in den Fahrzeugrahmen eingeleitet werden. Hierdurch können beispielsweise bei einem Aufprall hohe Kräfte aufgenommen werden, ohne dass es zur Zerstörung des Bodens und damit zur Verletzung des geschützten Batterieraums kommt. Der Batterieraum stellt dadurch einen Schutzraum für die Batterie dar.

Vorteilhaft ist es, dass ein Bodenblech vorgesehen ist, das auf dem Boden angeordnet ist und zumindest teilweise den Batterieraumbereich des Bodens überdeckt, und dass der Gurtbock so auf dem Batterieraumbereich des Bodens abgestützt ist, dass im Betrieb Druck- und/oder Biegekräfte mittels des Bodenblechs auf den Boden wirken. Hierdurch kann die auf dem Boden wirkende Kraft in der Fläche verteilt werden. Außerdem stellt das Bodenblech einen weiteren Schutz für den Batterieraum dar.

Vorteilhaft ist es, dass zumindest eine Befestigungseinrichtung vorgesehen ist, die zumindest ein Element des Fahrzeugrahmens umgreift, und dass die Befestigungseinrichtung außerhalb des Batterieraumbereichs angeordnet ist. Dadurch kann eine hohe Stabilität der Verbindung erreicht werden. Somit kann der Gurtbock direkt über dem Batterieraum angeordnet sein.

Vorteilhaft ist es, dass die Befestigungseinrichtung zumindest ein als Querträger des Fahrzeugrahmens ausgebildetes Element des Fahrzeugrahmens und/oder zumindest ein als Längsträger des Fahrzeugrahmens ausgebildetes Element des Fahrzeugrahmens umgreift. Dadurch wird eine zuverlässige Verbindung ermöglicht, die bei einem Fahrzeugaufprall hohe Kräfte aufnehmen kann.

Vorteilhaft ist es, dass zumindest eine Befestigungseinrichtung ein als oberes Halteelement ausgebildetes Verbindungselement und ein als unteres Halteelement ausgebildetes Verbindungselement aufweist, die voneinander geteilt ausgebildet sind, und/oder dass die Befestigungseinrichtung in Bezug auf eine Fahrzeuglängsrichtung zumindest teilweise, vorzugsweise zumindest im Wesentlichen, seitlich von dem Batterieraumbereich angeordnet ist. Hierdurch wird eine vorteilhafte Montage von der Seite ermöglicht. Ein Aus- und Einbau der Batterie zum Realisieren der Befestigung ist nicht notwendigerweise erforderlich.

Optional kann eine Seitenwandanbindung vorgesehen sein, die an einer Seitenwand des Freizeitfahrzeugs angebracht und/oder anbringbar ist und dazu ausgestaltet ist, den Gurtbock mit der Seitenwand zu verbinden. Die Seitenwandanbindung kann Teil des Gurtbocks sein. Eine Seitenwand kann insbesondere eine in Fahrtrichtung bzw. Fahrzeuglängsrichtung des Fahrzeugs gesehen seitliche angeordnete Wand des Freizeitfahrzeugs sein. Die Seitenwandanbindung kann an dem Gurtbock angebracht oder anbringbar sein. Beispielsweise kann die Seitenwandanbindung im Wesentlichen flächig ausgestaltet sein. Optional kann eine Hauptfläche der Seitenwandanbindung im Wesentlichen parallel zu einer Fläche der Seitenwand vorgesehen sein. Die Seitenwandanbindung kann zumindest ein Befestigungsmittel zur Befestigung an der Seitenwand umfassen. Beispielsweise kann die Seitenwandanbindung zumindest ein Schraubenloch und/oder einen Befestigungsclipmechanismus umfassen. Die Seitenwandanbindung kann insbesondere vorteilhaft bei der Verwendung in Freizeitfahrzeugen, die als Kastenwagen ausgestaltet sind, sein. Aber auch eine Verwendung in anderen Freizeitfahrzeugen ist denkbar.

Vorteilhaft ist es, dass zumindest eine Batterie vorgesehen ist, die in dem Batterieraum angeordnet ist. Der Batterieraum kann hierbei als Schutzraum für die Batterie dienen. Gegebenenfalls können auch mehrere Batterien in dem Batterieraum angeordnet sein. Beispielsweise kann auch eine Batterie zur elektrischen Versorgung von Einrichtungen, insbesondere einer Beleuchtung eines Innenraums, von Steckdosen, eines Kühlschranks und dergleichen, in dem Batterieraum angeordnet sein.

Vorteilhaft ist es, dass zumindest ein elektrischer Traktionsantrieb vorgesehen ist und dass zumindest eine zumindest für den Traktionsantrieb dienende Batterie vorgesehen ist, die in dem Batterieraum angeordnet ist. Der Batterieraum kann hierbei auch ausschließlich für zumindest eine Traktionsbatterie dienen.

Vorteilhaft ist es, dass zumindest ein Crashelement vorgesehen ist, das bei einem Fahrzeugaufprall zum Schutz einer in dem Batterieraum angeordneten Batterie dient, und dass das zumindest eine Crashelement außerhalb des Batterieraums angeordnet ist. Dadurch kann die Schutzfunktion des Schutzraums für die Batterie weiter verbessert werden. Das Crashelement kann beispielsweise zwischen dem Batterieraum und einer Seitenwand des Freizeitfahrzeugs angeordnet sein. Das Crashelement kann vorzugsweise auf einer Höhe des Batterieraums angeordnet sein. Das Crashelement kann zur Aufnahme von einwirkenden Crash-Kräften, insbesondere seitlichen Crash-Kräften, ausgestaltet sein.

Vorteilhaft ist es, dass Lastpunkte vorgegeben sind, an denen die Verbindungselemente mit dem Fahrzeugrahmen verbunden sind. Hierdurch ist eine vorteilhafte Befestigung möglich, die sich zu herkömmlichen Systemen mit Last- oder Sitzschienen, die zur Befestigung im Fahrzeug dienen, abgrenzt.

Vorteilhaft ist es, dass der Gurtbock so mit dem Fahrzeugrahmen verbunden ist, dass Zugkräfte im Betrieb nur außerhalb des Batterieraumbereichs in den Fahrzeugrahmen eingeleitet werden. Hierdurch kann ein hoher Schutz für die im Batterieraum angeordnet Batterie erzielt werden.

Vorteilhaft ist es, dass der Fahrzeugrahmen und/oder der Gurtbock so ausgestaltet sind, dass bei einer Montage und/oder einer Demontage des Gurtbocks eine Batterie nicht aus dem Batterieraum entfernt werden muss. Diese Ausgestaltung kann insbesondere im Verbund damit erreichbar sein, dass der Gurtbock zumindest teilweise oberhalb des Batterieraums angeordnet ist, und dass der Gurtbock so mit dem Fahrzeugrahmen verbunden ist, dass Verbindungselemente, die zum Verbinden des Gurtbocks mit dem Fahrzeugrahmen dienen, außerhalb des Batterieraums angeordnet sind. Durch eine solche Anordnung kann es ermöglicht werden, dass eine Demontage der Batterie, insbesondere einer Batterie des Antriebssystems, bei der der Montage des Gurtbocks nicht notwendig ist. Damit kann eine besonders einfache Montage oder Demontage des Gurtbocks ermöglicht werden. Je nach Anwendungsfall können ein oder mehrere der folgenden Ausgestaltungen und Vorteile realisiert sein.

Bei einer besonders bevorzugten Ausgestaltung wird eine Gurtgestellanbindung für Freizeitfahrzeuge realisiert, die als Hybrid- oder Batterie elektrisches Reisemobil oder Campervan ausgebildet sind.

Das Freizeitfahrzeug kann auf einem Basisfahrzeug basieren, das von einem Fahrzeughersteller (OEM) in Serie hergestellt wird. Bei einer herkömmlichen Ausgestaltung, insbesondere bei einem Verbrennerantrieb, ist kein Verbotsraum von einem OEM im Bereich der Längsträger vorgegeben. Dadurch können bei einer herkömmlichen Ausgestaltung eines Basisfahrzeugs für den Ausbau des Freizeitfahrzeugs Anbindungen für Gurtgestelle flexibel positioniert werden und Umgreifungen der Längsträger oder Bohrungen fast überall gesetzt werden. Bei einem herkömmlichen Basisfahrzeug als Basis für das Freizeitfahrzeug ist also ein Ausbau von Komponenten, beispielsweise Tanks, möglich, und dies wird ferner auch dafür genutzt, dass Zugänglichkeiten zur Montage geschaffen werden.

Im Unterschied dazu ist es bei einem Batterie elektrischen Antrieb denkbar, dass ein Verbotsraum für die Batterie vom OEM vorgegeben wird. Dies kann für den Ausbau die zusätzliche Vorgabe darstellen, dass weder Verbindungselemente in den Verbotsraum ragen dürfen noch der Boden über dem Verbotsraum verändert werden darf. In solch einem Fall kann mit der vorgeschlagenen und gegebenenfalls vorteilhaft weitergebildeten Lösung eine Nutzung solch eines Basisfahrzeugs erfolgen, auch wenn ein Gurtbock beispielsweise über der Batterie angeordnet werden soll.

Speziell kann auch dann, wenn der Fahrzeugrahmen bei bereits eingebauter Batterie nicht von beiden Seiten zugänglich ist, eine Montage des Gurtbocks erfolgen. Hierbei kann eine dahingehende Vorgabe, beispielsweise eines OEMs, dass der Bereich über der Batterie bei Montage nicht beschädigt, gebohrt oder verändert werden darf, eingehalten werden. Es wird eine günstige Krafteinleitung in die Längsträger von unten ermöglicht.

Speziell ist ein Einsatz bei Batterie elektrischen Fahrzeugen (BEV) vorteilhaft. Vorteilhaft ist aber auch ein Einsatz bei anderen Fahrzeugen mit großer Batterie im Verbotsraum. Der Verbotsraum kann der vom OEM vorgegebene Raum mit der Antriebsbatterie sein. Speziell bei solch einem Fahrzeug mit Batterie wird ermöglicht, dass dessen Anbindung des Gurtgestells (Gurtbocks) nicht im Verbotsraum der Antriebsbatterie ist.

Speziell bei einem Fahrzeug mit Batterie kann die Anbindung des Gurtbocks an vorgegebene Lastpunkte im Fahrzeug, beispielsweise für Lastenschienen, erfolgen, was eine Abgrenzung zu herkömmlichen Systemen mit Last- oder Sitzschiene darstellt.

Eine Montage wird möglich, ohne dass eine Demontage der Batterie im Verbotsraum erfolgen muss. Eine Umgreifung kann durch ein oberes und ein unteres Halteelement erfolgen, die geteilt sind, um eine Montage ohne Demontage der Batterie zu ermöglichen. Eine Anbindung mit Umgreifung an zumindest einem Querträger außerhalb des Verbotsraumes ist vorteilhaft. Großteils kann eine einseitige Zugänglichkeit bei Montage bestehen. Speziell am Verbotsraum kann nur eine einseitige Montage erfolgen.

Oberhalb des Verbotsraums kann nur eine Abstützung auf dem Boden, insbesondere Fußboden, oder einem Bodenblech erfolgen. Eine Drehmomentstütze kann vorgesehen sein. Der Begriff der Drehmomentstütze ist hierbei breit zu verstehen und umfasst Stützen, Träger sowie Vierkantrohre beziehungsweise Mehrkantrohre. Die Drehmomentstütze kann über dem Verbotsraum zur Aufnahme von Zug-, Druck- und Biegekräften dienen.

Das Umgreifen zum Befestigen kann nur unter dem Bodenblech erfolgen, sofern es nicht im Verbots- beziehungsweise Batterieraum erfolgt. Vorzugsweise ist diesbezüglich ein außerhalb des Batterieraums vorgegebener eingeschränkten Raum bestimmt, in dem das Umgreifen erfolgt.

Crashelemente der Batterie können die Sicherheit erhöhen und im eingeschränkten Raum angeordnet sein. Zugkräfte werden vorzugsweise nur außerhalb des Verbots- beziehungsweise Batteriebereichs in die Karosserie beziehungsweise den Rahmen eingeleitet. Druck- und Biegekräfte werden vorzugsweise im Bereich über der Batterie in die Karosserie beziehungsweise den Rahmen eingeleitet.

Somit besteht eine vorteilhafte Anwendbarkeit auf Fahrzeuge mit Batterien für den Antrieb.

Weitere Vorteile und Einzelheiten der Erfindung werden anhand der in den schematischen Figuren dargestellten Ausführungsbeispiele näher erläutert. Hierbei zeigen:
- Fig. 1: ein Freizeitfahrzeug in einer auszugsweisen, schematischen Darstellung entsprechend einer möglichen Ausgestaltung der Erfindung, wobei ein Fahrzeugrahmen in einer Ansicht von oben dargestellt ist;
- Fig. 2: einen Gurtbock für das in Fig. 1 gezeigte Freizeitfahrzeug in einer schematischen, räumlichen Darstellung entsprechend einem Ausführungsbeispiel und
- Fig. 3: einen Gurtbock für das in Fig. 1 gezeigte Freizeitfahrzeug sowie den Fahrzeugrahmen in einer auszugsweisen, räumlichen Darstellung entsprechend einem weiteren Ausführungsbeispiel, wobei eine mögliche Befestigung veranschaulicht ist.

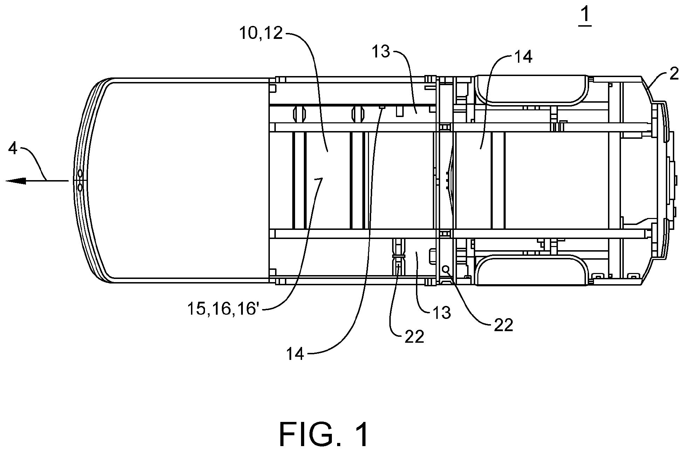

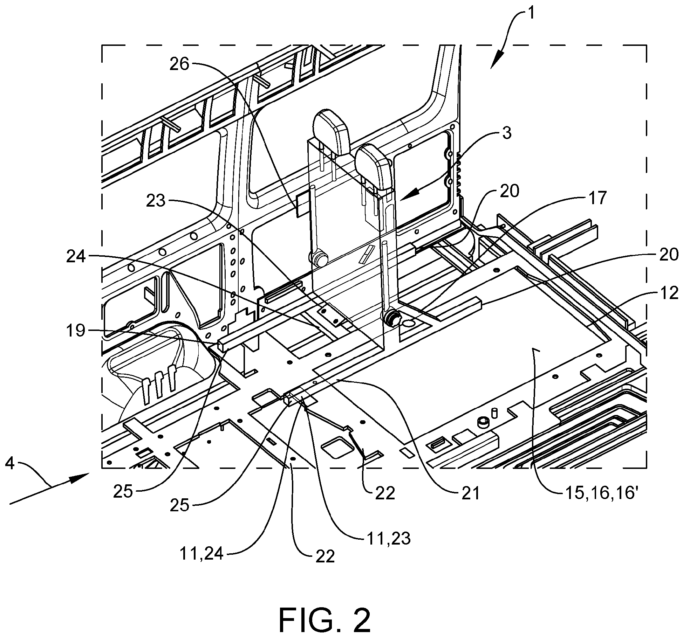

Fig. 1 zeigt ein Freizeitfahrzeug 1 in einer auszugsweisen, schematischen Darstellung entsprechend einer möglichen Ausgestaltung der Erfindung, wobei ein Fahrzeugrahmen 2 in einer Ansicht von oben dargestellt ist. Das Freizeitfahrzeug 1 ist vorzugsweise als Wohnmobil ausgebildet. Ferner zeigt Fig. 2 einen Gurtbock 3 für das in Fig. 1 gezeigte Freizeitfahrzeug 1 in einer schematischen, räumlichen Darstellung entsprechend einem Ausführungsbeispiel. Der Gurtbock 3 kann für eine hintere, insbesondere eine zweite oder dritte, Sitzreihe dienen. Der Gurtbock 3 ist an dem Fahrzeugrahmen 2 befestigt.

Für das Freizeitfahrzeug 1 ist eine Fahrzeuglängsrichtung 4 gegeben. Der Gurtbock 3 ist in diesem Ausführungsbeispiel in der Fahrzeuglängsrichtung 4 und somit in Fahrtrichtung orientiert. Bei einer abgewandelten Ausgestaltung kann der Gurtbock 3 aber auch entgegen der Fahrzeuglängsrichtung 4 orientiert sein.

Außerdem ist ein Batterieraum 10 vorgegeben, der in diesem Ausführungsbeispiel innerhalb des Fahrzeugrahmens 2 angeordnet ist. Der Gurtbock 3 ist zumindest teilweise oberhalb des Batterieraums 10 angeordnet. Zur Verbindung des Gurtbocks 3 mit dem Fahrzeugrahmen dienen Verbindungselemente 11, von denen einige exemplarisch bezeichnet sind. Der Gurtbock 3 ist so mit dem Fahrzeugrahmen 2 verbunden, dass alle Verbindungselemente 11, die zum Verbinden des Gurtbocks 3 mit dem Fahrzeugrahmen 2 dienen, außerhalb des Batterieraums 10 angeordnet sind. Optional kann zumindest eine Seitenwandanbindung 26 zur Anbindung des Gurtbocks 3 an eine Seitenwand des Freizeitfahrzeugs 1 vorgesehen sein.

Beispielsweise kann ein elektrischer Traktionsantrieb für das Freizeitfahrzeug 1 vorgesehen sein. Dann kann eine für den Traktionsantrieb dienende Batterie 12 in dem Batterieraum 10 angeordnet sein. Außerhalb des Batterieraums 10 können eingeschränkte Räume 13, 14 vorgesehen sein, wobei die eingeschränkten Räume 13 seitlich neben dem Batterieraum 10 und der eingeschränkte Raum 14 in Fahrzeuglängsrichtung 4 hinter dem Batterieraum 10 angeordnet sind. Die eingeschränkten Räume 13, 14 können zur Befestigung des Gurtbocks 3 dienen. In den eingeschränkten Räumen, aber auch an anderer Stelle können Crashelemente angeordnet sein, die dann bei einem Fahrzeugaufprall zum Schutz der in dem Batterieraum 10 angeordneten Batterie 12 dienen. Die Crashelemente sind vorzugsweise außerhalb des Batterieraums 10 angeordnet.

Über dem Batterieraum 10 ist ein Batterieraumbereich 15 eines Bodens 16 angeordnet. Der Batterieraumbereich 15 des Bodens 16 begrenzt den Batterieraum 10. Ferner ist die Batterie 12 unter dem Batterieraumbereich 15 angeordnet, während der Gurtbock zumindest teilweise über dem Batterieraumbereich 15 des Bodens und gegebenenfalls teilweise neben dem Batterieraumbereich 15 des Bodens 16 angeordnet ist. Insbesondere die Verbindungselemente 11 sind dabei außerhalb des Batterieraumbereichs 15 des Bodens 16 angeordnet.

Außerdem ist eine Drehmomentstütze 20 vorgesehen, die über dem Batterieraumbereich 15 des Bodens 16 angeordnet ist. Die Drehmomentstütze 20 ist auf dem Batterieraumbereich 15 des Bodens 16 abgestützt, so dass bei einem Aufprall (Crash) eine zuverlässige Abstützung des Gurtbocks 3 gegeben ist. Der Gurtbock 3 weist bei dieser Ausgestaltung einen optionalen Stützfuß 17 auf. Der Stützfuß 17 ist indirekt über eine Drehmomentstütze 20 auf dem Batterieraumbereich 15 des Bodens 16 abgestützt. Hierbei befindet sich der Stützfuß 17 vollständig oberhalb des Batterieraumbereichs 15 des Bodens 16. Es kann optional vorgesehen sein, dass keine formschlüssige Verbindung zwischen dem Stützfuß 17 und dem Boden 16 vorgesehen ist.

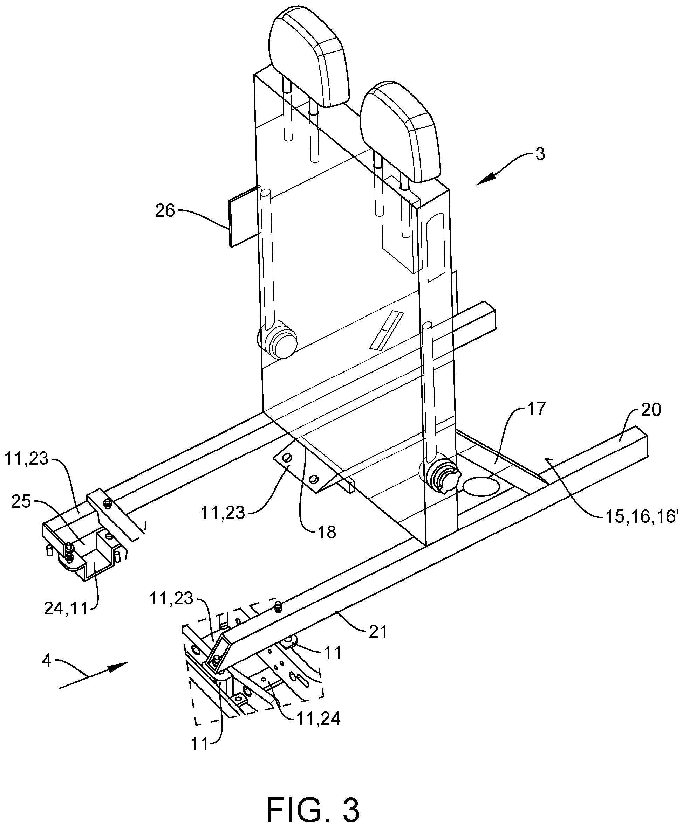

Fig. 3 zeigt einen Gurtbock 3 für das in Fig. 1 gezeigte Freizeitfahrzeug 1 sowie den Fahrzeugrahmen 2 in einer auszugsweisen, räumlichen Darstellung entsprechend einem Ausführungsbeispiel, wobei eine mögliche Befestigung veranschaulicht ist. Bei dem in Fig. 3 gezeigten Ausführungsbeispiel sind Befestigungseinrichtungen 21 mit jeweils einem oberen Haltelement 23 und einem unteren Haltelement 24 vorgesehen, die ein als Querträger 22 ausgebildetes Element 22 des Fahrzeugrahmens 2 umgreifen. Die Befestigungseinrichtungen 21 umfassen jeweils ein als oberes Halteelement 23 ausgebildetes Verbindungselement 11 und ein als unteres Halteelement 24 ausgebildetes Verbindungselement 11, die voneinander geteilt ausgebildet sind. Optional ist eine der Befestigungseinrichtungen 21 seitlich neben und damit außerhalb des Batterieraumbereichs 15 angeordnet. Optional ist eine weitere der Befestigungseinrichtungen 21 vor dem Batterieraumbereich 15 und damit außerhalb des Batterieraumbereichs 15 angeordnet. Bei den in Fig. 2 und 3 dargestellten Ausführungsbeispielen ist jeweils in entsprechender Weise eine Befestigung an dem Querträger 22 hinter dem Batterieraumbereich 15 möglich.

Somit kann der Gurtbock 3 so mit dem Fahrzeugrahmen 2 verbunden sein, dass Zugkräfte im Betrieb nur außerhalb des Batterieraumbereichs 15 in den Fahrzeugrahmen 2 eingeleitet werden. Bei einer Ausgestaltung können Lastpunkte 25 vorgegeben sein, an denen die Verbindungselemente 11 mit dem Fahrzeugrahmen 2 verbunden sind. Exemplarisch sind Lastpunkte 25 gekennzeichnet. Die Lastpunkte 25 befinden sich außerhalb des Batterieraums 10.

Außerdem ist zumindest eine Drehmomentstütze 20 vorgesehen, die über dem Batterieraumbereich 15 des Bodens 16 angeordnet ist. Die Drehmomentstütze 20 ist auf dem Batterieraumbereich 15 des Bodens 16 abgestützt, so dass bei einem Aufprall (Crash) eine zuverlässige Abstützung des Gurtbocks 3 gegeben ist. Die zumindest eine Drehmomentstütze 20 erstreckt sich in diesem Beispiel im Wesentlichen in Fahrzeuglängsrichtung 4. Insbesondere die Drehmomentstütze 20 in der Nähe der Fahrzeugwand kann optional auch weggelassen werden. Optional ist, insbesondere gegenüber der zumindest einen Drehmomentstütze 20 zumindest eine Abstützung 19 vorgesehen. Bei einer abgewandelten Ausgestaltung kann zusätzlich noch ein Bodenblech vorgesehen sein, auf dem der Gurtbock 3 im Batterieraumbereich 15 an dem Boden 16 abgestützt ist. Dann erfolgt eine mittelbare Abstützung des Gurtbocks 3 an dem Boden 16, nämlich mittels des Bodenblechs.

Somit werden beispielsweise bei einem Aufprall Druck- und/oder Biegekräfte zumindest am Batterieraumbereich 15 des Bodens 16 mittels des Bodens 16 in den Fahrzeugrahmen 2 eingeleitet. Wenn ein Bodenblech 16' vorgesehen ist, dann wirken die Druck- und/oder Biegekräfte hierbei mittels des Bodenblechs 16` auf den Boden 16 ein.

Der Gurtbock 3 weist bei dieser Ausgestaltung einen Stützfuß 17 auf. Der Stützfuß 17 ist indirekt über eine Drehmomentstütze 20 auf dem Batterieraumbereich 15 des Bodens 16 abgestützt. Hierbei befindet sich der Stützfuß 17 vollständig oberhalb des Batterieraumbereichs 15 des Bodens 16. Insbesondere ist auch keine formschlüssige Verbindung zwischen dem Stützfuß 17 und dem Boden 16 vorgesehen. Es kann jedoch alternativ auch vorgesehen sein, dass eine formschlüssige Verbindung zwischen dem Stützfuß 17 und dem Boden 16 vorhanden ist. Der Stützfuß 17 kann mit den Drehmomentstützen 20 zusammenwirken, insbesondere um eine Übertragung von Kräften in Fahrzeuglängsrichtung 4, die auf den Gurtbock 3 wirken, in den Fahrzeugboden zu ermöglichen.

Die Erfindung ist nicht auf die beschriebenen Ausführungsbeispiele beschränkt.

## Patentansprüche

1. Freizeitfahrzeug (1), insbesondere ein Wohnmobil, mit einem Fahrzeugrahmen (2) und zumindest einem Gurtbock (3), der zumindest mittelbar an dem Fahrzeugrahmen (2) befestigt ist,
**dadurch gekennzeichnet,**
**dass** ein Batterieraum (10) vorgegeben ist, der zumindest teilweise innerhalb des Fahrzeugrahmens (2) angeordnet ist, dass der Gurtbock (3) zumindest teilweise oberhalb des Batterieraums (10) angeordnet ist, und dass der Gurtbock (3) so mit dem Fahrzeugrahmen (2) verbunden ist, dass Verbindungselemente (11), die zum Verbinden des Gurtbocks (3) mit dem Fahrzeugrahmen (2) dienen, außerhalb des Batterieraums (10) angeordnet sind.

2. Freizeitfahrzeug nach Anspruch 1,
**dadurch gekennzeichnet,**
**dass** über dem Batterieraum (10) ein Batterieraumbereich (15) eines Bodens (16) angeordnet ist, der den Batterieraum (10) begrenzt und der zumindest teilweise zwischen dem Gurtbock (3) und dem Batterieraum (10) angeordnet ist, und die Verbindungselemente (11) außerhalb des Batterieraumbereichs (15) des Bodens (16) angeordnet sind.

3. Freizeitfahrzeug nach Anspruch 2,
**dadurch gekennzeichnet,**
**dass** der Gurtbock (3) zumindest einen Stützfuß (17) aufweist, der zumindest mittelbar auf dem Batterieraumbereich (15) des Bodens (16) abgestützt ist, dass der Stützfuß (17) vollständig oberhalb des Batterieraumbereichs (15) des Bodens (16) angeordnet ist und dass der Stützfuß (17) selbst zumindest nicht formschlüssig mit dem Boden (16) verbunden ist.

4. Freizeitfahrzeug nach Anspruch 2 oder 3,
**dadurch gekennzeichnet,**
**dass** zumindest eine Drehmomentstütze (20) vorgesehen ist, die zumindest teilweise über dem Batterieraumbereich (15) des Bodens (16) angeordnet ist, und dass die Drehmomentstütze (20) zumindest mittelbar auf dem Batterieraumbereich (15) des Bodens (16) abgestützt ist.

5. Freizeitfahrzeug nach einem der Ansprüche 2 bis 4,
**dadurch gekennzeichnet,**
a) **dass** der Gurtbock (3) so auf dem Batterieraumbereich (15) des Bodens (16) abgestützt ist, dass im Betrieb Druck- und/oder Biegekräfte zumindest am Batterieraumbereich (15) des Bodens (16) zumindest mittels des Bodens (16) in den Fahrzeugrahmen (2) eingeleitet werden, und/oder
b) **dass** ein Bodenblech (16`) vorgesehen ist, das auf dem Boden (16) angeordnet ist und zumindest teilweise den Batterieraumbereich (15) des Bodens (16) überdeckt und dass der Gurtbock (3) so auf dem Batterieraumbereich (15) des Bodens (16) abgestützt ist, dass im Betrieb Druck- und/oder Biegekräfte mittels des Bodenblechs (16`) auf den Boden (16) wirken.

6. Freizeitfahrzeug nach einem der Ansprüche 1 bis 5,
**dadurch gekennzeichnet,**
**dass** zumindest eine Befestigungseinrichtung (21) vorgesehen ist, die zumindest ein Element (22) des Fahrzeugrahmens (2) umgreift, und dass die Befestigungseinrichtung (21) außerhalb des Batterieraumbereichs (15) angeordnet ist.

7. Freizeitfahrzeug nach Anspruch 6,
**dadurch gekennzeichnet,**
**dass** die Befestigungseinrichtung (21) zumindest ein als Querträger (22) des Fahrzeugrahmens (2) ausgebildetes Element (22) des Fahrzeugrahmens (2) umgreift.

8. Freizeitfahrzeug nach Anspruch 6 oder 7,
**dadurch gekennzeichnet,**
**dass** zumindest eine Befestigungseinrichtung (21) ein als oberes Halteelement (23) ausgebildetes Verbindungselement (11) und ein als unteres Halteelement (24) ausgebildetes Verbindungselement (11) aufweist, die voneinander geteilt ausgebildet sind, und/oder dass die Befestigungseinrichtung (21) in Bezug auf eine Fahrzeuglängsrichtung (4) zumindest teilweise, vorzugsweise zumindest im Wesentlichen, seitlich von dem Batterieraumbereich (15) angeordnet ist.

9. Freizeitfahrzeug nach einem der Ansprüche 1 bis 8,
**dadurch gekennzeichnet,**
**dass** eine Seitenwandanbindung vorgesehen ist, die an einer Seitenwand des Freizeitfahrzeugs angebracht und/oder anbringbar ist und dazu ausgestaltet ist, den Gurtbock mit der Seitenwand zu verbinden.

10. Freizeitfahrzeug nach einem der Ansprüche 1 bis 9,
**dadurch gekennzeichnet,**
a) **dass** zumindest eine Batterie (12) vorgesehen ist, die in dem Batterieraum (10) angeordnet ist und/oder
b) **dass** zumindest ein elektrischer Traktionsantrieb vorgesehen ist und dass zumindest eine zumindest für den Traktionsantrieb dienende Batterie (12) vorgesehen ist, die in dem Batterieraum (10) angeordnet ist, und/oder
c) **dass** zumindest ein Crashelement vorgesehen ist, das bei einem Fahrzeugaufprall zum Schutz einer in dem Batterieraum (10) angeordneten Batterie (12) dient, und dass das zumindest eine Crashelement außerhalb des Batterieraums (10) angeordnet ist.

11. Freizeitfahrzeug nach einem der Ansprüche 1 bis 10,
**dadurch gekennzeichnet,**
a) **dass** Lastpunkte (25) vorgegeben sind, an denen die Verbindungselemente (11) mit dem Fahrzeugrahmen (2) verbunden sind und/oder
b) **dass** der Gurtbock (3) so mit dem Fahrzeugrahmen (2) verbunden ist, dass Zugkräfte im Betrieb nur außerhalb des Batterieraumbereichs (15) in den Fahrzeugrahmen (2) eingeleitet werden.

12. Freizeitfahrzeug nach einem der Ansprüche 1 bis 11,
**dadurch gekennzeichnet,**
**dass** der Fahrzeugrahmen (2) und/oder der Gurtbock (3) so ausgestaltet sind, dass bei einer Montage und/oder einer Demontage des Gurtbocks (3) eine Batterie nicht aus dem Batterieraum (10) entfernt werden muss.
